# EUROPEAN PATENT APPLICATION

(11) **EP 0 587 328 A2**
(43) Date of publication of application: **16.03.1994**
(21) Application number: 93306535.1
(22) Date of filing: 18.08.1993
(51) Int. Cl.: G06F 15/70

(54) **An image processing system**

(30) Priority: 05.09.1992 GB 9218861
(71) Applicant: International Business Machines Corporation, Armonk, N.Y. 10504 (US)
(72) Inventor: Turner, Richard William, Andover, Hampshire, SP10 3EY (GB)
(74) Representative: Burt, Roger James, Dr.

(57) **Abstract**

The present invention provides a system and method for determining the 3D location of an object from 2D images, wherein the images are obtained from cameras mounted at a fixed distance from each other and having a number of markers located within the field of view of each camera, said markers being positioned in a single plane. The system comprises: entry means for entering information relating to the location of the cameras and markers in real 3D space; a calculation means for calculating the equation of the single plane containing the markers from the information provided by the entry means; projection means programmed to receive a succession of images, and for each image to project a point of interest in the image onto the single plane, and to evaluate an equation of the line passing through the location of the camera and the location of the point of interest in the single plane; and means for determining the position in 3D space of the point of interest responsive to lines generated by the projection means relating to corresponding images from the cameras.

## Description

The invention relates to the field of motion analysis, which can be loosely defined as the study of moving objects, and in particular to the field of biomechanics, which is the study of human motion.

Motion analysis as a science relies on the ability to capture sequences of images of a moving object. This is done using either film or solid-state video cameras, which capture sequences of images.

In most - if not all - such applications, it is necessary to ascertain from the images the position in three dimensions of objects seen. This requires a number of objects or points whose position is known, which are used to calibrate the camera. This calibration relates a position in the image to known coordinates in three dimensional world space.

The mathematical relationship between world space and the image is known as a perspective projection, and is described mathematically by a projection matrix. In the case of a three dimensional perspective projection, this is a 3 by 4 matrix with twelve elements. One of these controls the overall scale of the transformation and can be arbitrarily set to one. This leaves eleven unknown coefficients which must be found in order to compute the perspective projection that we need. If we know the position of a point in world space, this can be used to provide two constraints to the solution since we can derive one equation each in x and y for the point. Thus, we require six known points, as we have eleven unknowns.

Unfortunately having six points yields twelve equations, and we only have eleven unknowns. The system is said to be mathematically overdetermined, and iterative techniques need to be employed to solve it. Typically this is done using least squares methods. Apart from being time consuming, the solution to an overdetermined system is an approximation, and therefore contains errors.

An additional constraint is that at least two of the six points must not be coplanar with the other four. If this is not obeyed, the resulting projective mapping becomes singular and cannot be solved mathematically.

Once successfully calibrated, a point on an image can directly be related to a known point in world space by 3D perspective projection.

Current state of the art employs three dimensional reference frames that are placed into the cameras field of view. These frames are of known size and are placed in a known position. The corners of the frame or markers attached to it are then used to provide the required six points. Since they are three dimensional objects it is always possible to find six points obeying the coplanarity restriction.

Unfortunately solid reference frames often get in the way of what you are trying to film, and have to be moved. For example, if the performance of athletes is being studied, it is not possible to leave a reference frame in the middle of a running track or on top of a diving board.

Accordingly it is an object of the present invention to provide a system which can calculate the position of an object in 3D space from the images without requiring a three dimensional reference frame to be placed in the camera's field of view.

Accordingly the present invention provides an image processing system for determining the 3D location of an object from 2D images, wherein the images are obtained from cameras mounted at a fixed distance from each other and having a number of markers located within the field of views of each camera, said markers being positioned in a single plane and the system comprising: entry means for entering information relating to the location of the cameras and markers in real 3D space; a calculation means for calculating the equation of the single plane containing the markers from the information provided by the entry means; projection means programmed to receive a succession of images, and for each image to project a point of interest in the image onto the single plane, and to evaluate an equation of the line passing through the location of the camera and the location of the point of interest in the single plane; and means for determining the position in 3D space of the point of interest responsive to lines generated by the projection means relating to corresponding images from the cameras.

Viewed from a second aspect the present invention provides a method for determining the 3D location of an object from 2D images, wherein the images are obtained from cameras mounted at a fixed distance from each other and having a number of markers located within the field of view of each camera, said markers being positioned in a single plane, the method comprising the steps of: entering information relating to the location of the cameras and markers in real 3D space; calculating the equation of the single plane containing the markers from the information provided by the entry means; receiving a succession of images, and for each image projecting a point of interest in the image onto the single plane, and evaluating an equation of the line passing through the location of the camera and the location of the point of interest in the single plane; and determining the position in 3D space of the point of interest responsive to lines generated by the projection means relating to corresponding images from the cameras.

The present invention overcomes the above-mentioned problems by reducing a problem that currently requires a 3D projective mapping to one requiring two 2D projective mappings. This is done using a mathematical simplification.

The present invention will be described further, by way of example only, with reference to an embodiment thereof, as illustrated in the accompanying drawings, in which:
Figure 1 is a diagram illustrating the measurements that need to be entered by the entry means in order to calibrate the system of the preferred embodiment;
Figure 2 illustrates an embodiment in which the four known points are formed by mounting markers on vertical poles beside a running track; and
Figure 3 shows a typical image produced by the system of the preferred embodiment.

In the preferred embodiment it is ensured that the four points that are known all lie in the same plane. This can be simply done by marking them on a wall or other convenient surface, or by mounting markers on vertical poles. The distance from the cameras to each of the four points is measured, which defines the plane containing them in world space. The four points now define the corners of a two dimensional polygon on a known plane in world space. This appears in the camera image as another polygon. The projective mapping of one polygon onto another is a 2D problem and the projection matrix required is now 3 by 3, with only eight unknown coefficients. These coefficients can be uniquely found given four known points; we use those defining the polygon itself.

For each point in our image, a corresponding point can now be found in the polygon defined in world space, since any point lying inside the known polygon in the image must also lie on a line starting at the camera and ending at the world space polygon. Since we have already defined the plane containing this polygon, we can convert the 2D polygon coordinates to 3D world space coordinates. We now have a known line in world space. Given two cameras, and two views of the same object, two lines in world space can be determined. The intersection point of these lines is the location in world space of the object.

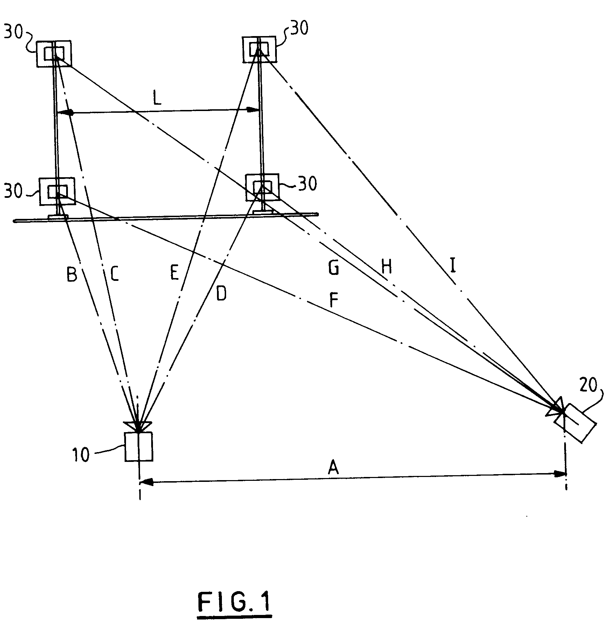

The system of the preferred embodiment will now be described in more detail with reference to Figure 1. Firstly two cameras 10, 20 are set up a certain distance A apart, and four points 30 are marked in each field of view on a wall or other suitable surface. The camera to camera baseline distance A is then measured, as are the distances B,C,D,E,F,G,H,I from both cameras to each marked point. The height of each known point and each camera is also measured.

These measurements are used by the system to calculate the world space position of each of the known points 30. A local coordinate system is used, with the origin at one of the cameras 10, 20. Then the equation of the plane containing the known points 30 is computed from the world space coordinates obtained in the previous step.

The system is now calibrated for use and the next step involves capturing the experimental images to be analysed. The two cameras 10, 20 run simultaneously giving two images of the subject taken from two different directions.

After the experimental images have been obtained then the known points are located by the system for each image. These image positions together with the world space coordinates computed above are used to compute a 2D projective mapping for each image. Each point of interest in the image is projected onto the plane containing the known points using the calculated projective mapping programmed into the projection means of the system. This gives the position of each point of interest in the known plane. Given this position and the position of the camera (which is known), the equation of the line passing through the camera location and the position in the known plane is calculated by the projection means.

By considering one image from each camera which show the same point of interest as viewed at a particular instant in time, two line equations can be generated as described above. These two lines can be solved by the system of the preferred embodiment using standard techniques to find the point at which they intersect in 3D space. This intersection point represents the location in world space of the object.

By employing such a technique the system of the preferred embodiment has a number of advantages over the prior art techniques. Firstly it provides an exact solution to the projective mapping problem, rather than an approximation as is provided by the prior art technique. Further it reduces the number of known points required to four. These four points are allowed to be coplanar, and so may be painted on a wall or other suitable surface. As a result a solid reference frame is no longer required, and the running track, diving board or other experimental area is not obstructed. Finally, unlike prior art solutions, which require both cameras to 'see' the same 3D reference frame, with the system of the preferred embodiment different points can be used in each camera's field of view provided that their relative location to one another is known in absolute terms. This allows much greater flexibility in camera placement and therefore improved experiment design.

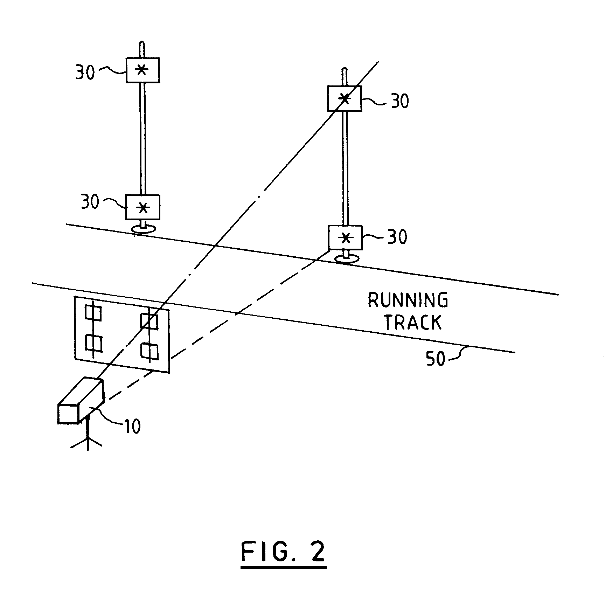

Figure 2 shows a preferred embodiment in which the four known points are formed by mounting markers on vertical poles beside a running track. As will be appreciated this is much more preferable for the athlete who is being filmed since there is no 3 dimensional reference frame to impede movement, and so the athlete can perform in a standard environment thus greatly improving the significance of the image data obtained.

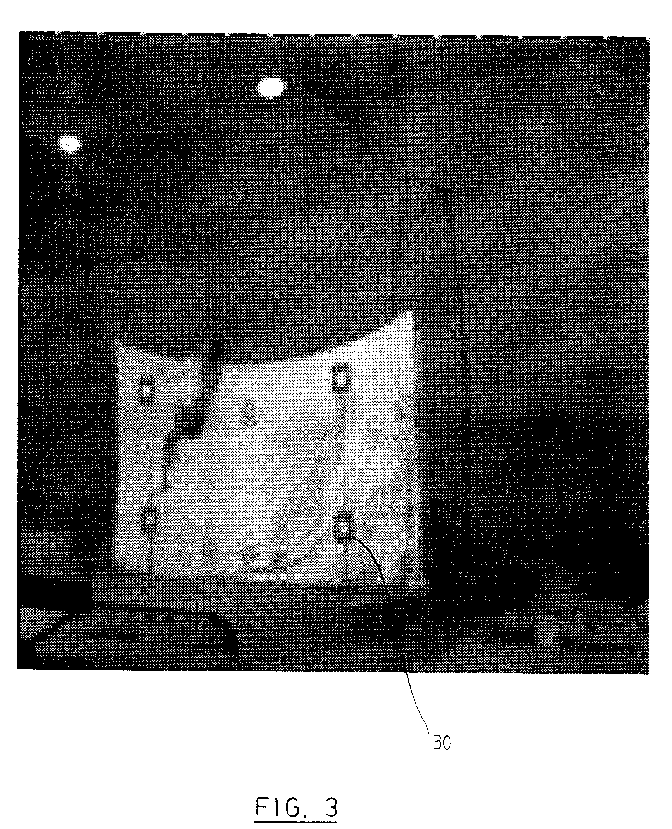

Figure 3 shows a typical image produced by the system of the preferred embodiment. The four markers 30 are clearly visible as is the representation of the athlete passing in front of them.

## Claims

1. An image processing system for determining the 3D location of an object from 2D images, wherein the images are obtained from cameras (10, 20) mounted at a fixed distance from each other and having a number of markers (30) located within the field of view of each camera, said markers being positioned in a single plane and the system comprising:
entry means for entering information relating to the location of the cameras and markers in real 3D space;
a calculation means for calculating the equation of the single plane containing the markers from the information provided by the entry means;
projection means programmed to receive a succession of images, and for each image to project a point of interest in the image onto the single plane, and to evaluate an equation of the line passing through the location of the camera and the location of the point of interest in the single plane; and
means for determining the position in 3D space of the point of interest responsive to lines generated by the projection means relating to corresponding images from the cameras (10, 20).

2. A system as claimed in Claim 1, wherein the projection means is programmed to perform a 2D projective mapping technique in order to project the point of interest in the 2D image onto an associated point in the 2D single plane.

3. A system as claimed in Claim 1 or Claim 2, wherein the calculation means uses a local coordinate system with the origin being positioned at one of the cameras (10, 20).

4. A system as claimed in any preceding claim, wherein the number of markers used equals four.

5. A system as claimed in any preceding claim, wherein two cameras are used to provide the 2D images.

6. A system as claimed in Claim 5 wherein the means for determining calculates the intersection of two lines representing the same point of interest projected onto the single plane from the position of each camera at a specific time, the intersection giving the position of the point of interest in real 3D space.

7. A method for determining the 3D location of an object from 2D images, wherein the images are obtained from cameras (10, 20) mounted at a fixed distance from each other and having a number of markers (30) located within the field of view of each camera, said markers being positioned in a single plane, the method comprising the steps of:
entering information relating to the location of the cameras and markers in real 3D space;
calculating the equation of the single plane containing the markers from the information provided by the entry means;
receiving a succession of images, and for each image projecting a point of interest in the image onto the single plane, and evaluating an equation of the line passing through the location of the camera and the location of the point of interest in the single plane; and
determining the position in 3D space of the point of interest responsive to lines generated by the projection means relating to corresponding images from the cameras (10, 20).
